# EUROPÄISCHE PATENTSCHRIFT

(11) **EP 1 399 801 B1**
(45) Veröffentlichungstag und Bekanntmachung des Hinweises auf die Patenterteilung: **27.10.2004**
(21) Anmeldenummer: 02745145.9
(22) Anmeldetag: 12.06.2002
(51) Int. Cl.: G06F 1/20

(54) **KÜHLLUFTFÜHRUNG**
COOLING AIR DUCT
SYSTEME DE GUIDAGE D'AIR DE REFROIDISSEMENT

(30) Priorität: 28.06.2001 DE 10131368
(43) Veröffentlichungstag der Anmeldung: 24.03.2004
(73) Patentinhaber: Fujitsu Siemens Computers GmbH, 80807 München (DE)
(72) Erfinder: HEIN, Holger, 86199 Augsburg (DE)
(74) Vertreter: Epping, Hermann, Fischer
(86) Internationale Anmeldenummer: PCT/DE2002/002154
(87) Internationale Veröffentlichungsnummer: WO 2003/003179

(56) Entgegenhaltungen:
- US-A- 5 297 005
- US-A- 6 113 485
- US-A- 6 148 907

## Beschreibung

Die Erfindung betrifft eine Kühlluftführung in einem Computer zur Kühlung eines wärmeerzeugenden Bauteils, wie zum Beispiel eines Prozessors, mit einem Anschlußteil, durch welches die Kühlluft eintritt und einer im Querschnitt u-förmigen Haube, welche über das zu kühlende Bauteil gestülpt werden kann und welche die Kühlluft vom Anschlußteil zum zu kühlenden Bauteil leitet.

Derartige Kühlluftführungen beziehungsweise Kühlhauben oder Kühlhutzen sind aus dem Stand der Technik vielfältig bekannt. Insbesondere werden sie eingesetzt, um auf dem Motherboard den oder die Prozessoren zu kühlen.

Da die Prozessoren unterschiedliche Größen aufweisen sowie eine variable Platzierung auf dem Motherboard besitzten, wurden bisher entweder mehrere spezielle Luftführungen bisher oder eine große starre Luftführung, die alle Prozessoren beziehungsweise Prozessorenplatzierungen abdeckt, verwendet. Diese große starre Luftführung hat jedoch den Nachteil, daß sie aufgrund des großen Querschnittes eine wesentlich ineffizientere Kühlung gewährleistet, als wenn die Breite der Kühlluftführung auf die Breite der Prozessoren abgestimmt ist.

Da die Prozessoren immer leistungsfähiger und somit die Leistungsaufnahme und damit auch die Wärmeabgabe immer größer wird, wurde dazu übergegangen, für jeden Prozessortyp eine eigene feste Kühlluftführung zu kreieren.

Der Erfindung liegt daher die Aufgabe zugrunde, die gattungsgemäße Kühlluftführung so weiter zu entwickeln, daß diese auch für eine Vielzahl von Prozessortypen und für eine variable Platzierung der Prozessortypen eingesetzt werden kann, ohne daß die Breite der Haube auf eine ineffiziente Breite gesteigert werden muß.

Die Aufgabe wird erfindungsgemäß dadurch gelöst, daß die Haube beweglich am Anschlußteil festgelegt ist.

Durch diese flexible Festlegung kann die Haube relativ zum Anschlußteil verschoben und genau über den Prozessor positioniert werden.

Um die hohe Kühleffizienz zu erhalten, ist die Haube in der Breite mit einem nur geringen Übermaß auf die Breite des zu kühlenden Bauteils abgestimmt.

Vorzugsweise ist die Haube lediglich seitlich zum Anschlußteil bewegbar und ist diese hierzu über Folienscharniere am Anschlußteil festgelegt. Vorzugsweise sind beidseitig zumindest zwei parallele Folienscharniere vorgesehen, so daß eine seitliche Bewegung der Haube durch die Folienscharniere möglich ist.

Um eine Abdichtung der Haube im Bereich oberhalb der Folienscharniere zu erzielen, ist gemäß einer Variante am Anschlußteil in diesem Bereich günstigerweise eine Platte ausgebildet, welche mit nur geringem Abstand oberhalb der Folienscharniere positioniert ist und auch seitlich über die Folienscharniere übersteht. Somit kann auch beim seitlichen Bewegen der Haube nahezu kein Luftaustritt nach oben erfolgen, da dieser durch die Platte gehemmt wird.

Eine alternative Ausführungsvariante sieht vor, daß oberhalb der Folienscharniere ein Luftzuführungskanal vorgesehen ist und seitlich des Luftzuführungskanales Lappen angeordnet sind, welche ebenso ein Austreten der Luft nach oben bei einer seitlichen Bewegung der Haube verhindern.

Gemäß einer bevorzugten Ausführungsform ist die Haube endseitig geschlossen und das Anschlußteil zum Anschluß an einen Lüfter ausgebildet.

Eine weitere Variante sieht vor, daß die Haube einen zusätzlichen Anschluß für einen Kühlluftschlauch zur Zufuhr von Frischluft aufweist.

Nachfolgend wird anhand eines in den Zeichnungen dargestellten Ausführungsbeispieles die Erfindung näher erläutert. In den Zeichnungen zeigen
- Figur 1: eine Schrägansicht der Kühlluftführung
- Figur 2: die Kühlluftführung in einer Schrägansicht von unten und
- Figur 3: die Kühlluftführung in Seitenansicht.

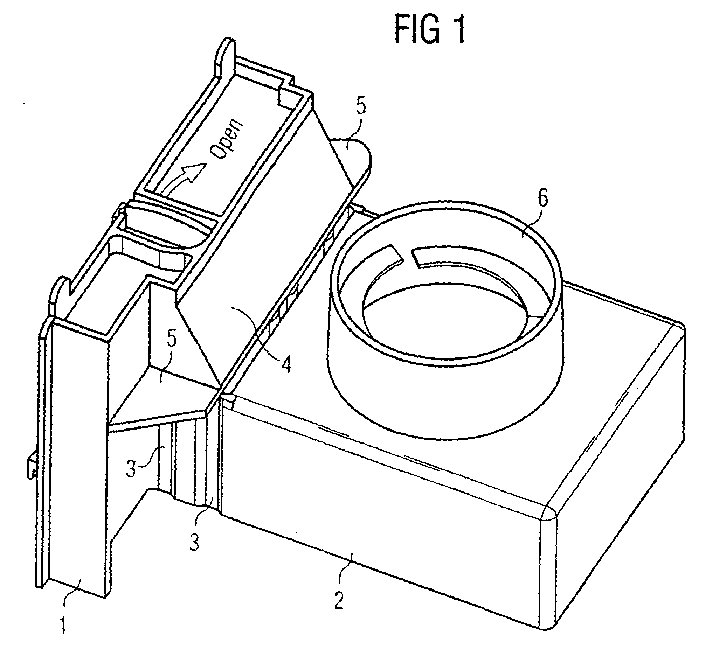

Figur 1 zeigt die erfindungsgemäße Kühlluftführung in einer Schrägansicht von oben. Die Kühlluftführung weist ein Anschlußteil 1 auf, welches insbesondere zum Anschluß an einem Lüfter in der Wandung eines Computers beziehungsweise einem Lüfter am Netzteil eines Computers ausgebildet ist.

An das Anschlußteil 1 schließt sich eine Haube 2 an, welche am Computer über das zu kühlende Bauteil gestülpt wird. Die Breite der Haube 2 ist auf die Breite des zu kühlenden Bauteiles abgestimmt, so daß diese mit einem nur geringem Übermaß über das zu kühlende Bauteil gestülpt werden kann. Die Haube 2 weist einen u-förmigen Querschnitt auf und ist endseitig geschlossen.

Die Haube 2 ist über zwei Folienscharniere 3 beidseitig am Anschlußteil 1 festgelegt.

In dem Bereich oberhalb der Folienscharniere 3 ist die Haube 2 offen. Das Anschlußteil 1 weist in diesem Bereich entweder eine durchgehende Platte auf (in den Zeichnungen nicht dargestellt) oder es ist wie in Figur 1 dargestellt ein Luftzuführungskanal 4 oberhalb der Haube 2 zwischen den beiden Folienscharnieren 3 ausgebildet und seitlich des Luftzuführungskanales sind Lappen 5 vorgesehen, so daß bei einem seitlichen Bewegen der Haube 2 die Kühlluft nicht seitlich des Luftführungskanales 4 nach oben entweichen kann.

Zur Steigerung der Kühlung weist die Haube 2 auch einen weiteren Kühlluftanschluß 6 auf, in welchem zum Beispiel ein Kühlluftschlauch zur Zufuhr von Frischluft aus der Umgebung des Computers geschlossen werden kann.

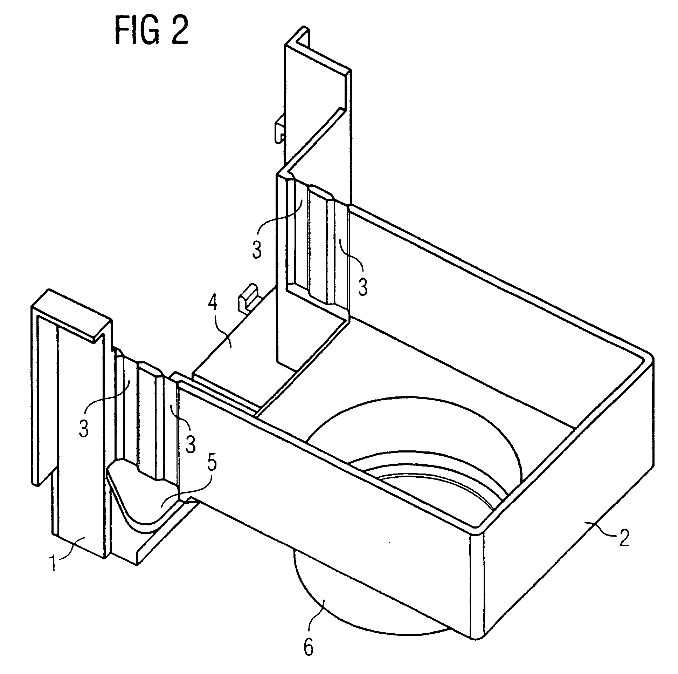

Figur 2 zeigt die Kühlluftführung gemäß Figur 1 in einer Schrägansicht von unten.

In Figur 2 ist der u-förmige Querschnitt der Haube 2 gut zu erkennen.

Desweiteren ist gut erkennbar, wie über den Luftkanal 4 zwischen den Lappen 5 die Kühlluft oberhalb der Folienscharniere 3 in die Haube 2 eingeleitet wird.

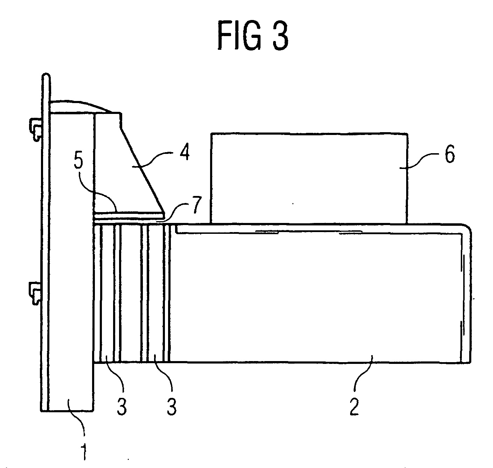

Figur 3 zeigt die erfindungsgemäße Kühlluftführung in Seitenansicht.

Die Lappen 5 sind über einen Spalt 7 beabstandet oberhalb der Folienscharniere 3 angeordnet. Der Spalt 7 ist möglichst klein dimensioniert, so daß die Haube 2 seitlich gegenüber dem Anschlußteil 1 durch die parallel verlaufenden Folienscharniere 3 bewegt werden kann, jedoch möglichst wenig Kühlluft in diesem Bereich austritt.

Die Erfindung ist nicht auf das dargestellte Ausführungsbeispiel beschränkt, es können zum Beispiel auch mehr als zwei parallel verlaufende Folienscharniere 3 vorgesehen sein.

### Bezugszeichenliste

- 1: Anschlußteil
- 2: Haube
- 3: Folienscharniere
- 4: Luftkanal
- 5: Lappen
- 6: Anschluß für zusätzlichen Kühlluftschlauch
- 7: Spalt

## Patentansprüche

1. Kühlluftführung in einem Computer zur Kühlung eines wärmeerzeugenden Bauteils, wie eines Prozessors, mit einem Anschlußteil (1), durch welches die Kühlluft eintritt und einer im Querschnitt u-förmigen Haube (2), welche über das zu kühlende Bauteil gestülpt werden kann und welche die Kühlluft vom Anschlußteil (1) zum zu kühlenden Bauteil leitet,
**dadurch gekennzeichnet, daß**
die Haube beweglich am Anschlußteil (1) festgelegt ist.

2. Kühlluftführung nach Anspruch 1,
**dadurch gekennzeichnet, daß**
die Haube in der Breite mit geringem Übermaß auf das zu kühlende Bauteil abgestimmt ist.

3. Kühlluftführung nach einem der Ansprüche 1 oder 2,
**dadurch gekennzeichnet, daß**
die Haube seitlich bewegbar am Anschlußteil (1) festgelegt ist.

4. Kühlluftführung nach einem der Ansprüche 1 bis 3,
**dadurch gekennzeichnet, daß**
die Haube über Folienscharniere (3) am Anschlußteil (1) festgelegt ist.

5. Kühlluftführung nach Anspruch 4,
**dadurch gekennzeichnet, daß**
beidseitig zumindest 2 parallele Folienscharniere (3) zwischen Haube (2) und Anschlußteil (1) vorgesehen sind.

6. Kühlluftführung nach einem der Ansprüche 4 oder 5,
**dadurch gekennzeichnet, daß**
am Anschlußteil (1) oberhalb und seitlich der Folienscharniere (3) eine Platte vorgesehen ist, welche auch bei seitlicher Bewegung der Haube (2) einen Luftaustritt in diesem Bereich nach oben im wesentlichen verhindert.

7. Kühlluftführung nach einem der Ansprüche 4 bis 6,
**dadurch gekennzeichnet, daß**
am Anschlußteil im Bereich oberhalb der Folienscharniere (3) ein Luftkanal (4) ausgebildet ist und seitlich des Luftkanales (4) Lappen (5) vorgesehen sind, welche bei einem seitlichen Bewegen der Haube (2) einen Luftaustritt seitlich des Luftkanales (4) weitgehend verhindern.

8. Kühlluftführung nach einem der Ansprüche 1 bis 7,
**dadurch gekennzeichnet, daß**
die Haube (2) endseitig geschlossen ausgebildet ist.

9. Kühlluftführung nach einem der Ansprüche 1 bis 7,
**dadurch gekennzeichnet, daß**
die Haube (2) einen Anschluß (6) für einen zusätzlichen Kühlluftschlauch aufweist.

10. Kühlluftführung nach einem der Ansprüche 1 bis 9,
**dadurch gekennzeichnet, daß**
das Anschlußteil (1) zum Anschluß an einen Lüfter ausgebildet ist.

## Claims

1. Cooling air guide in a computer for cooling a heat-generating component, such as a processor, having a connecting part (1), through which the cooling air enters, and a hood (2) which is U-shaped in cross section and can be placed over the component to be cooled and which conducts the cooling air from the connecting part (1) to the component to be cooled, **characterized in that** the hood is fastened moveably to the connecting part (1).

2. Cooling air guide according to Claim 1, **characterized in that** the hood is matched in width with a small excess size to the component to be cooled.

3. Cooling air guide according to either of Claims 1 and 2, **characterized in that** the hood is fastened in a laterally moveable manner to the connecting part (1).

4. Cooling air guide according to one of Claims 1 to 3, **characterized in that** the hood is fastened to the connecting part (1) via film hinges (3).

5. Cooling air guide according to Claim 4, **characterized in that** at least two parallel film hinges (3) are provided on both sides between the hood (2) and connecting part (1).

6. Cooling air guide according to either of Claims 4 and 5, **characterized in that** a plate is provided on the connecting part (1) above and to the side of the film hinges (3), the said plate essentially preventing air from exiting upwards in this region, even when the hood (2) moves laterally.

7. Cooling air guide according to one of Claims 1 to 6, **characterized in that** an air duct (4) is formed on the connecting part in the region above the film hinges (3) and tabs (5) are provided to the side of the air duct (4), the said tabs largely preventing air from exiting to the side of the air duct (4) when the hood (2) moves laterally.

8. Cooling air guide according to one of Claims 1 to 7, **characterized in that** the hood (2) is designed such that it is closed on the end side.

9. Cooling air guide according to one of Claims 1 to 7, **characterized in that** the hood (2) has a connection (6) for an additional cooling air hose.

10. Cooling air guide according to one of Claims 1 to 9, **characterized in that** the connecting part (1) is designed for connection to a fan.

## Revendications

1. Dispositif de guidage d'air de refroidissement dans un ordinateur pour refroidir un composant produisant de la chaleur, comme un processeur, comprenant une partie (1) de raccordement par laquelle l'air de refroidissement entre et une hotte (2) de section transversale en forme de u, qui peut être retournée sur le composant à refroidir et qui conduit l'air de refroidissement de la partie (1) de raccord au composant à refroidir, **caractérisé en ce que** la hotte est fixée de manière mobile à la partie (1) de raccordement.

2. Dispositif de guidage d'air de refroidissement suivant la revendication 1, **caractérisé en ce que** la largeur de la hotte est adaptée avec un léger surdimensionnement au composant à refroidir.

3. Dispositif de guidage d'air de refroidissement suivant l'une des revendications 1 ou 2, **caractérisé en ce que** la hotte est fixée de manière mobile latéralement à la partie (1) de raccordement.

4. Dispositif de guidage d'air de refroidissement suivant l'une des revendications 1 à 3, **caractérisé en ce que** la hotte est fixée à la partie (1) de raccordement par des charnières (3) souples.

5. Dispositif de guidage d'air de refroidissement suivant la revendication 4, **caractérisé en ce qu'**il est prévu des deux côtés au moins deux charnières (3) souples parallèles entre la hotte (2) et la partie (1) de raccordement.

6. Dispositif de guidage d'air de refroidissement suivant l'une des revendications 4 ou 5, **caractérisé en ce qu'**il est prévu sur la partie (1) de raccordement au-dessus de la charnière (3) souple et latéralement à celle-ci une plaque qui empêche sensiblement, même lorsque la hotte (2) est déplacée latéralement, de l'air de sortir à cet endroit vers le haut.

7. Dispositif de guidage d'air de refroidissement suivant l'une des revendications 4 à 6, **caractérisé en ce qu'**il est constitué sur la partie de raccordement dans la zone au-dessus de la charnière (3) souple, un canal (4) pour l'air et latéralement au canal (4) pour de l'air, des pattes (5), qui empêchent dans une grande mesure, lorsque la hotte (2) est déplacée latéralement, que de l'air sorte latéralement du canal (4) pour de l'air.

8. Dispositif de guidage d'air de refroidissement suivant l'une des revendications 1 à 7, **caractérisé en ce que** la hotte (2) est fermée du côté de l'extrémité.

9. Dispositif de guidage d'air de refroidissement suivant l'une des revendications 1 à 7, **caractérisé en ce que** la hotte (2) a un raccord (6) pour un tuyau souple supplémentaire pour de l'air de refroidissement.

10. Dispositif de guidage d'air de refroidissement suivant l'une des revendications 1 à 9, **caractérisé en ce que** la partie (1) de raccordement est constituée en vue d'être raccordée à un ventilateur.
